Europäisches Patentamt

European Patent Office

Office européen des brevets

(11) Veröffentlichungsnummer: **0 304 549**

**A1**

# (12) EUROPÄISCHE PATENTANMELDUNG

(21) Anmeldenummer: **88107669.9**

(22) Anmeldetag: **13.05.88**

(51) Int. Cl.⁴: **E04D 11/00**

(30) Priorität: 26.08.87 DE 3728471

(43) Veröffentlichungstag der Anmeldung:
01.03.89 Patentblatt 89/09

(84) Benannte Vertragsstaaten:
**AT BE CH DE ES FR GB IT LI LU NL SE**

(71) Anmelder: **Firma Carl Freudenberg**
**Höhnerweg 2-4**
**D-6940 Weinheim/Bergstrasse(DE)**

(72) Erfinder: **Butscher, Alfons**
**Carl-Orff-Strasse 37**
**D-6943 Birkenau(DE)**
Erfinder: **Graab, Gerhard, Dr.**
**Nibelungenring 41**
**D-6800 Mannheim 24(DE)**
Erfinder: **Heckel, Klaus, Dr.**
**Am Wetzelsberg 6**
**D-6946 Gorxheimertal(DE)**

(74) Vertreter: **Weissenfeld-Richters, Helga, Dr.**
**Höhnerweg 2**
**D-6940 Weinheim/Bergstrasse(DE)**

(54) **Tragschicht für eine Dachbegrünung.**

(57) Eine Tragschicht für eine Dachbegrünung, umfassend eine tiefgezogene, flüssigkeitsundurchlässige, ebene Kunststofffolie (1), die über die Oberfläche verteilte, regelmäßig wiederkehrende, napfartige Einstülpungen (2) aufweist sowie einander überkreuzende Kanäle (3) verminderter Tiefe, die die Einstülpungen (2) verbinden sowie Abflußlöcher (4) zur Ableitung überschüssigen Wassers, die die Kunststoffolie (1) im Bereich des Bodens der Kanäle (3) senkrecht durchdringen. Die näpfchenartigen Einstülpungen (2) sind mit einem formbeständigen Speichermaterial (5) gefüllt, beispielsweise mit Blähton. Sie sind oberseitig abgedeckt durch eine Filterschicht (6) aus einem ebenen Fasermaterial, das die Kunststoffolie (1) im Bereich von 40 bis 60% der Gesamtfläche berührt und mit derselben verklebt ist.

Fig. 1

Schnitt A – A

EP 0 304 549 A1

## Tragschicht für eine Dachbegrünung

Die Erfindung betrifft eine Tragschicht nach dem Oberbegriff von Anspruch 1.

Eine solche Tragschicht befindet sich im Handel. Die dazugehörige Kunststoffolie ist von plattenartiger Steife und nicht rollbar, was wegen des Transportproblems kleinformatige Größen bedingt und damit einen erheblichen Arbeitsaufwand bei der Verlegung. Dieser wird weiter vergrößert durch die Notwendigkeit, die enthaltenen Komponenten sämtlich in voneinander unabhängige Arbeitsvorgängen aufbringen zu müssen, nämlich in einem ersten Arbeitsschritt die eigentliche Kunststoffolie, in einem zweiten Arbeitsschritt das Speichermaterial und in einem dritten Arbeitsschritt die Filterschicht. Auch lassen die Formbeständigkeit und die Dränagewirkung insbesondere nach längerem Gebrauch zu wünschen übrig. Die Dränageöffnungen sind von kleinem Querschnitt und so angeordnet, daß sich eine gegenseitige Berührung zwischen ihrer Mündung und der Filterschicht ergibt.

Der Erfindung liegt die Aufgabe zugrunde, eine solche Tragschicht derart weiterzuentwickeln, daß sich bei einer vereinfachten Möglichkeit der Verlegung auch im langfristigen Gebrauch keine nennenswerten Veränderungen der Formbeständigkeit und insbesondere der Dränagewirkung ergibt.

Diese Aufgabe wird erfindungsgemäß bei einer Tragschicht der eingangs genannten Art mit den kennzeichnenden Merkmalen von Anspruch 1 gelöst. Auf vorteilhafte Ausgestaltung nehmen die Ansprüche 2 bis 10 Bezug.

Die erfindungsgemäße Tragschicht unterscheidet sich von der vorbekannten Ausführung dadurch, daß die Kunststoffolie und die Filterschicht verklebt sind und gemeinsam das in den Einstülpungen enthaltene Speichermaterial anliegend umschließen. Dieses besteht aus unnachgiebigen Partikeln vorzugsweise aus Blähton, was in Verbindung mit der Umschließung mit den etwas nachgiebigen Materialien aus Kunststoffolie und der Filterschicht die ausgezeichnete Formbeständigkeit und Tragfähigkeit der Tragschicht bedingt.

Von großer Bedeutung in dieser Hinsicht ist auch die unterschiedliche Form und Größe, die Härte und Oberfläche der Partikel. Bereits unter Zugrundelegung des Eigengewichtes sind dadurch Relativverlagerungen weitestgehend ausgeschlossen. Darüberhinaus ist die diesbezügliche Gefahr bei der erfindungsgemäßen Tragschicht noch mehr reduziert durch die spezielle Dimensionierung der Ausstülpungen und die sich durch die Aufbringung des Erdreiches ergebende Belastung.

Die Ausstülpungen können bei kreisförmiger Grundfläche und im wesentlichen säulenförmiger Gestalt einen Durchmesser haben, der es zuläßt, wenigstens drei Partikel auf dem Boden zu verteilen und nicht mehr als vier Partikel gleicher Größe in senkrechter Richtung übereinander. Die gegenseitige Zuordnung der einzelnen Partikel ist in diesem Falle besonders stabil und gewährleistet die Erzielung einer guten Tragfähigkeit. Dabei ist es von besonderem Vorteil, daß die mechanische Belastung der Folie und der Filterschicht besonders gering ist. In beiden Fällen lassen sich daher die diesbezüglichen Werte und damit auch die Flächengewichte im Vergleich zu den bekannten Ausführungen deutlich reduzieren. Die Steifigkeit der fertigen Tragschicht ist entsprechend vermindert und sie kann dadurch aufgerollt werden, was für die Verlegung von Vorteil ist.

Die gegenseitige Berührungsfläche zwischen der Kunststoffolie und der Filterschicht soll 40 bis 60% der Gesamtfläche betragen, um sicherzustellen, daß einerseits eine ausreichende Haftung und andererseits eine ausreichende Dränagewirkung gewährleistet ist. Letztere vollzieht sich über die Abflußlöcher. Diese sind im Bereich der Kanäle und folglich in einem Abstand von der Filterschicht angeordnet. Sie können daher hinsichtlich ihres Querschnittes groß dimensioniert sein, was Verstopfungen ausschließt und im langfristigen Gebrauch eine gute Dränagewirkung gewährleistet.

Die Kunststoffolie und die Filterschicht sind in den einander berührenden Flächenbereichen zweckmäßig durchgehene verklebt, was der aus einem Fasermaterial bestehenden Filterschicht eine erhöhte Formbeständigkeit verleiht und die Querströmung überschüssigen Wassers in Richtung der Einstülpungen bzw. Kanäle begünstigt. Auch im Bereich der unmittelbaren Verklebungszonen werden dadurch Übernässungen des auflastenden Erdreiches zuverlässig vermieden. Auch in Hinblick auf diesen Effekt soll die gegenseitige Berührungsfläche zwischen der Filterschicht und der Kunststoffolie zweckmäßig 45 bis 55% der Gesamtfläche betragen.

Die der Wasserableitung dienenden Kanäle haben ein gleichbleibendes Profil und einen sich parallel zu der Filterschicht erstreckenden Boden. Die Gefahr des Auftretens von ablagerungsbedingten Verstopfungen ist dadurch weitestgehend reduziert. Die Abflußlöcher sind zweckmäßig am Boden der Kanäle angeordnet und durchdringen diesen in senkrechter Richtung. Sich in den Einstülpungen bzw. dem darin enthaltenen Speichermaterial ansammelndes Wasser, das das Niveau des Bodens der Kanäle übersteigt, wird dadurch in zuverlässiger Weise durch die Abflußlöcher abgeleitet, so daß die Gefahr einer Übernässung des auflastenden Erdreiches nicht gegeben ist.

Dennoch ist die Speicherkapazität der erfindungsgemäßen Tragschicht erheblich und gestattet unter mitteleuropäischen Klimabedingungen die Überbrückung langer Trockenzeiten.

Die Kanäle sind zweckmäßig in sich parallel zueinander erstreckenden Scharen zusammengefaßt, wobei gegebenenfalls auch mehrere, derartige Scharen vorgesehen sein können, die einander durchschneiden. Im letztgenannten Falle resultiert ein in sich geschlossenes und ineinander übergehendes Kanalsystem, was die zuverlässige Ableitung überschüssiger Nässe auch dann gewährleistet, wenn einzelne der Abflußlöcher durch unvorhergesehene Umstände verstopft werden sollten. Hierbei hat es sich des weiteren als zweckmäßig erwiesen, wenn zumindest eine Schar geradlinig verlaufende Kanäle umfaßt, welche eine zweite Schar ähnlicher Kanäle zwischen den Einstülpungen durchschneidet. Im Zuge der erstgenannten SChar von Kanälen weist die Kunststoffolie infolge des vorausgegangenen Tiefziehprozesses eine geringfügige Schwächung auf, die im Zuge ihrer gesamten Länge gleichbleibend ist. Das Aufrollen der Tragschicht quer zur Erstreckung der genannten Kanäle wird dadurch begünstigt.

Beieiner Ausführung der erfindungsgemäßen Tragschicht, bei der zwei Scharen einander durchschneidender Kanäle vorgesehen sind, hat es sich als vorteilhaft bewährt, wenn die Abflußlöcher an der Stelle gegenseitiger Durchschneidungen der Kanäle angeordnet sind. Sie können hier unter Vermeidung einer unzulässigen Schwächung der Tragfähigkeit der Tragschicht hinsichtlich ihres Querschnittes besonders groß gestaltet werden, was der Vermeidung unerwünschter Verstopfungen zugute kommt. Bei einem kreisförmig begrenzten Profil ist eine lichte Weite, die die jenige der Breite des Bodens der Kanäle übersteigt, ohne weiteres erzielbar.

Die Einstülpungen der Kunststoffolie sind in Hinblick auf die Erzielung einer guten Tragfähigkeit der Tragschicht zweckmäßig kegelstumpfförmig gestaltet und mit einem nach unten verjüngten Querschnitt versehen. Auch bei leicht geneigter Verlegung der Tragschicht ist hierdurch ein Kollabieren der Tragschicht nicht mehr zu befürchten.

Eine beispielhafte Ausführung der erfindungsgemäßen Tragschicht ist in der als Anlage beigefügten Zeichnung dargestellt. Sie wird nachfolgend näher erläutert. Es zeigen:

Figur 1 eine Tragschicht der erfindungegemäßen Art in quergeschnittener Darstellung

Figur 2 die in der Tragschicht gemäß Figur 1 enthaltene Kunststoffolie in der Draufsicht.

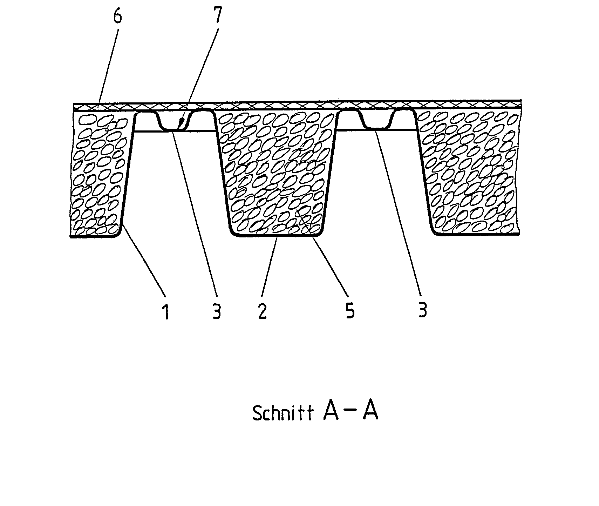

Die in Figur 1 gezeigte Tragschicht wird durch die tiefgezogene Kunststoffolie 1 gebildet, durch die Filterschicht 6 und das Speichermaterial 5, welches in die Einstülpungen 2 der KUnststoffolie 1 eingebettet ist. Die Kunststoffolie 1 und die Filterschicht 6 sind im Bereich der einander berührenden Flächen durch gegenseitige Verklebung unlösbar verbunden. Sie umschließen das aus Blähton bestehende Speichermaterial 5 auf allen Seiten. Trotz der vergleichsweise großen Nachgiebigkeit der Filterschicht 6 und der Kunststoffolie 1 wird hierdurch eine ausgezeichnete Tragfähigkeit in senkrechter Richtung erreicht.

Die Kunststoffolie 1 besteht aus Polyethylen und hat eine Dicke von 1,0 mm. Sie ist mit kegelstumpfförmigen Einstülpungen versehen, deren Mittelpunkte auf einem quadratischen Grundraster von 50 mm angeordnet sind.

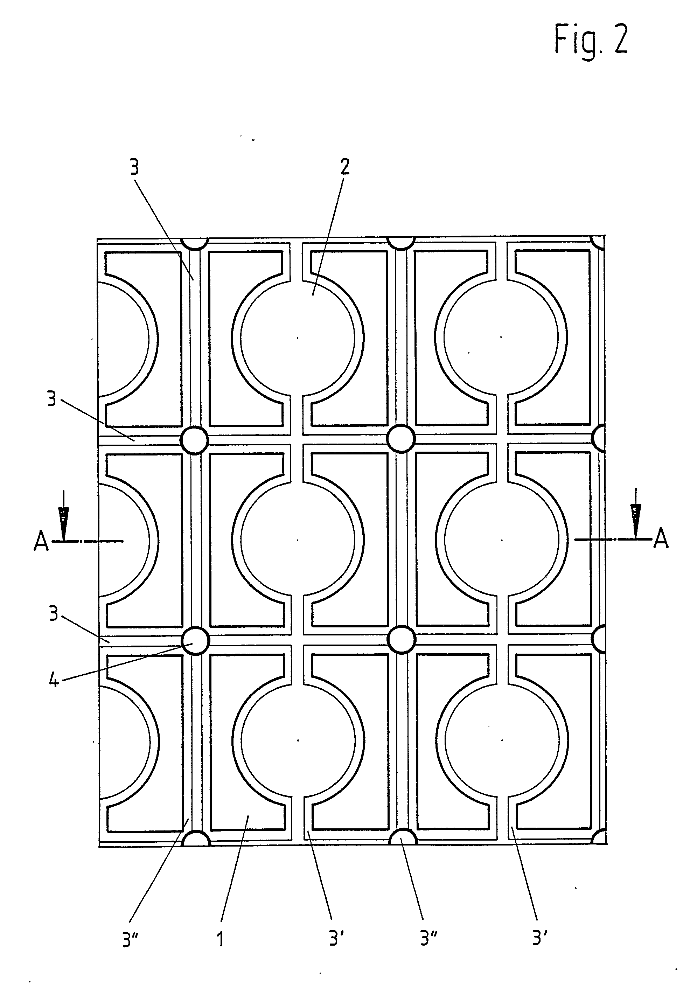

Der Innendurchmesser beträgt an oberen Ende etwa 30 mm und am unteren Ende etwa 23 mm bei einer lichten Höhe von 28 mm. Sie sind untereinander in Längsrichtung der verwendeten Kunststoffolie durch die Kanäle $3'$ (Figur 2) verbunden. Diese erstrecken sich parallel zu den Kanälen $3''$, die in den Zwischenräumen der einzelnen Einstülpungen 2 angeordnet sind und werden gemeinsam mit diesen von den sich quer zu ihrer Richtung erstreckenden, untereinander parallelen Kanälen 3 durchschnitten. Sämtliche Kanäle und Eintiefungen bilden dadurch ein in sich geschlossenes, zusammenhängendes System. Dieses enthält die Abflußlöcher 4, welche an den Stellen der gegenseitigen Überschneidung der Kanäle 3 und der Kanäle $3''$ den Boden derselben senkrecht durchdringen.

Die Kanäle 3, $3'$ und $3''$ haben an allen Stellen ein übereinstimmendes, im wesentlichen trapezförmig begrenztes Profil. Dieses ist nach unten verjüngt und hat am Boden eine Breite von etwa 3,5 mm. Die Abflußlöcher 4 sind kreisförmig begrenzt. Ihr Durchmesser beträgt ca. 4,5 mm.

Mit der Oberseite der vorstehend beschriebenen, tiefgezogenen Kunststoffolie ist die Filterschicht 6 verklebt. Diese besteht aus einem Vliesstoff aus endlosen Polypropylenfasern.

Die Polypropylenfasern sind unmittelbar nach ihrer Herstellung und Bildung in einer feingeschlängelten Struktur vereint und haben einen Titer von durchschnittlich 3,5 dtex. Das Flächengewicht des Vliesstoffes beträgt etwa 80g/m² und die Dicke nach der Fertigstellung etwa 5 mm. Der Vliesstoff ist durch Punktverschweißung verfestigt. Diese wird vorgenommen unter Verwendung eines beheizten Kalanders, bestehend aus einer gravierten Stahlwalze und einer damit in Eingriff stehenden Gummiwalze.

Die Gravur der Stahlwalze ist waffelähnlich ausgebildet, wobei die Erhebungen von pyramidenstumpfförmiger Gestalt sind. Die erhaben vorstehenden, ebenen Stirnflächen umfassen 12% der Gesamtfläche, die Temperatur beträgt 145° C, die Anpressung an die Gummiwalze 25 - 26 kp/cm². Der damit verfestigte Vliesstoff hat in dicht nebeneinanderliegenden Flächenbereichen einerseits Verschweißungszonen, in denen die die Fasern bildende Substanz vollständig verschmolzen ist und daneben andere Bereiche, in denen die Fasern vollkommen lose aneinander anliegen. Neben einer guten Eigenfestigkeit ergibt sich hierdurch eine gute Filterwirkung, welche das Hindurchtreten von Schwebstoffen in unterhalb des Vliesstoffes liegende Bereiche völlig ausschließt.

Die vorstehend beschriebene Filterschicht wird durch Pulverpunktverschweißung mit der Oberseite der tiefgezogenen Kunststoffolie 1 verbunden und unlösbar vereint. Sie ist ebenso wie diese und der in den Eintiefungen 2 enthaltene Blähton völlig verrottungssicher und inert gegenüber chemischen Einflüssen. Die ausgezeichneten Gebrauchseigenschaften der neuwertigen Tragschicht bleiben dadurch langfristig sicher erhalten.

**Ansprüche**

1. Tragschicht für eine Dachbegrünung, umfassend eine aus ebenem Material tiefgezogene, flüssigkeitsundurchlässige Kunststoffolie, die über die Oberfläche verteilte, regelmäßig wiederkehrende, napfartige Einstülpungen aufweist sowie einander überkreuzende Kanäle verminderter Tiefe, die die Einstülpungen verbinden sowie Abflußlöcher für die Ableitung überschüssigen Wassers, die die Kunststoffolie durchdringen, wobei die Einstülpungen mit einem formbeständigen Speichermaterial gefüllt sind und wobei eine Filterschicht aus ebenem Fasermaterial die Oberseite der Kunststoffolie durchgehend überdeckt, dadurch gekennzeichnet, daß die Kunststoffolie (1) und die Filterschicht (6) verklebt sind, daß die gegenseitige Berührungsfläche zwischen der Filterschicht (6) und der Kunststoffolie (1) 40 bis 60% der Gesamtfläche beträgt und daß die Abflußlöcher (4) die Kunststoffolie (1) im Bereich der Kanäle (3) durchdringen.

2. Tragschicht nach Anspruch 1, dadurch gekennzeichnet, daß die Kunststoffolie (1) und die Filterschicht (6) durchgehend verklebt sind.

3. Tragschicht nach Anspruch 1 bis 2, dadurch gekennzeichnet, daß die gegenseitige Berührungsfläche zwischen der Filterschicht (6) und der Kunststoffolie (1) 45 bis 55% der Geamtfläche beträgt.

4. Tragschicht nach Anspruch 1 bis 3, dadurch gekennzeichnet, daß die Kunststoffolie (1) durch eine langgestreckte Bahn gesichert wird und daß eine erste Gruppe von Kanälen vorgesehen ist, die sich quer zur Richtung der Bahn erstreckt.

5. Tragschicht nach Anspruch 4, dadurch gekennzeichnet, daß die erste Gruppe von Kanälen ein sich im Bereich des Bodens (7) parallel zu ihrer Richtung erstreckendes Filmscharnier umfaßt.

6. Tragschicht nach Anspruch 1 bis 5, dadurch gekennzeichnet, daß die Kanäle (3) einen Boden (7) haben, der sich parallel zu der Filterschicht (6) erstreckt.

7. Tragschicht nach Anspruch 6, dadurch gekennzeichnet, daß die Abflußlöcher (4) die Kunststoffolie (1) im Bereich des Bodens (7) senkrecht durchdringen.

8. Tragschicht nach Anspruch 1 bis 7, dadurch gekennzeichnet, daß die Kanäle (3) einander zumindest teilweise zwischen den Einstülpungen (2) durchschneiden.

9. Tragschicht nach Anspruch 1 bis 8, dadurch gekennzeichnet, daß die Abflußlöcher (4) im Bereich der Durchschneidungen der Kanäle (3) angeordnet sind.

10. Tragschicht nach Anspruch 7 bis 8, dadurch gekennzeichnet, daß die Abflußlöcher (4) quer zur Erstreckung des Bodens (7) eine Breite haben, die wenigstens so groß ist wie die Breite des Bodens (7).

11. Tragschicht nach Anspruch 1 bis 10, dadurch gekennzeichnet, daß die Abflußlöcher (4) ein kreisförmig begrenztes Profil haben.

12. Tragschicht nach Anspruch 1 bis 11, dadurch gekennzeichnet, daß die Kunststoffolie (1) mit Einstülpungen (2) versehen ist, die kegelstumpfförmig ausgebildet sind und die einen nach unten verminderten Querschnitt haben.

Fig. 1

Schnitt A – A

Fig. 2

## EINSCHLÄGIGE DOKUMENTE

| | Kennzeichnung des Dokuments mit Angabe, soweit erforderlich, | Betrifft | KLASSIFIKATION DER |
|---|---|---|---|

verschieblichen Gehäuseteil, und

Fig. 2 eine Seitenansicht einer erfindungsgemäßen Lärmschutzvorrichtung einer zweiten alternativen Bauart, bei der das gesamte Gehäuse verschieblich ist.

chen Gehäuseteils 14 mittels Schrauben 32 festgeschraubt. Ein abgewinkelter Träger 34 ist am oberen Bereich des Ständers 8 befestigt, wobei das dem Ständer 8 zugewandte freie Ende des Daches 20 des Gehäuses 6 über Schrauben 36 am abgewinkelten Schenkel des Trägers 34 befestigt ist.

Batch name.................................: D890131FPN

Country....................................: EP
Patent publication number..................: 0000000000303603
Patent type................................: AO

First entry operation :
                    Post...................: 6